# EUROPÄISCHE PATENTSCHRIFT

(11) **EP 0 974 473 B1**
(45) Veröffentlichungstag und Bekanntmachung des Hinweises auf die Patenterteilung: **05.03.2003**
(21) Anmeldenummer: 99112102.1
(22) Anmeldetag: 23.06.1999
(51) Int. Cl.: B60D 5/00, B61D 17/22

(54) **Balg oder Element eines Balges eines Überganges zwischen zwei gelenkig miteinander verbundenen Fahrzeugen**
Bellow or part of a bellow of a passage between two joined articulated parts of a vehicle
Soufflet ou partie d'un soufflet d'un passage entre deux parties reliées de manière articulée d'un véhicule

(30) Priorität: 22.07.1998 DE 19832858
(43) Veröffentlichungstag der Anmeldung: 26.01.2000
(73) Patentinhaber: HÜBNER Gummi- und Kunststoff GmbH, D-34123 Kassel (DE)
(72) Erfinder: Koch, Robert, 37242 Bad Sooden-Allendorf (DE)
(74) Vertreter: WALTHER, WALTHER & HINZ Patentanwälte

(56) Entgegenhaltungen:
- EP-A- 0 285 162
- EP-A- 0 544 203
- CH-A- 650 979
- DE-A- 2 646 663
- DE-A- 2 934 486
- DE-A- 3 613 729
- DE-A- 4 140 418
- GB-A- 374 802

## Beschreibung

Die vorliegende Erfindung betrifft einen Balg oder ein Element eines Balges eines Überganges zwischen zwei gelenkig miteinander verbundenen Fahrzeugen, wobei der Balg aus gespritztem Kunststoff hergestellt ist.

Falten- oder Wellenbälge sind Bestandteil eines Übergangs zwischen zwei gelenkig miteinander verbundenen Fahrzeugen.. Ein solcher Übergang besteht im Einzelnen aus einer Übergangsbrücke, einem Gelenk und einem die Brücke bzw. Gelenk umgebenden Balg. Dieser Balg dient im Wesentlichen dem Schutz der Passagiere beim Überwechseln zwischen den einzelnen gelenkig miteinander verbundenen Fahrzeugen. Ein solcher Faltenoder Wellenbalg muss aufgrund der auftretenden Relativbewegungen zwischen den einzelnen Fahrzeugen ein extremes Verformungsvermögen aufweisen. Das heißt, ein solcher Balg muss in der Lage sein, allen Nick-, Wank- und Versatzbewegungen der beiden gelenkig miteinander verbundenen Fahrzeuge relativ zueinander nachzugeben.

Bei der Herstellung der einzelnen Wellen eines derartigen Wellenbalges wird nun derart vorgegangen, dass diese insbesondere im Eckbereich aus einzelnen, in Balgumfangsrichtung verlaufenden Streifen, aufgebaut sind, die zur Bildung der U-förmigen Wölbung der Welle miteinander verklebt bzw. vernäht werden. Zur Herstellung eines vollständigen Wellenbalges werden dann die einzelnen Wellen miteinander vernäht, wobei im Verbindungsbereich einzelner Wellen umlaufende im Querschnitt U-förmige Rahmen zur Versteifung vorgesehen sind.

Hieraus wird deutlich, dass die Herstellung eines derartigen Balges sehr aufwendig und damit teuer ist. Hinzukommt, dass die Nähte Verwerfungen bilden, die an der benachbarten Welle reiben und unweigerlich zum Verschleiß dieser Welle dadurch führen, dass hier die Materialstärke abnimmt.

Bei der Herstellung der einzelnen Falten eines Faltenbalges werden einzelne Materialstreifen ziehharmonikaartig miteinander an ihren Längskanten miteinander vernäht, wobei die hierbei entstehenden Kanten durch im Querschnitt U-förmige Rahmen eingefasst sind. Auch die Herstellung eines derartigen Faltenbalges ist sehr aufwendig und damit teuer.

Aus der gattungsgemäßen EP 285 161 A1 ist eine beschichtete Gewebebahn bekannt, die zu einem Balg ausgebildet ist bzw. es ist die Herstellung eines Balges aus einer solchen mit einer Kunststoffschicht versehenen Gewebebahn bekannt. Die unterschiedliche Steifigkeit des Balges wird dadurch erreicht, dass der Balg durch Zufuhr von Elektronen- oder Röntgenstrahlungen an den gewünschten Stellen weicher bzw. an anderen Stellen härter bzw. steifer wird.

Aus der DE 26 46 663 A1 ist der Aufbau eines Faltenbalges bekannt, wobei eine äußere und eine innere Gewebeschicht durch eine Schicht aus einem Elastomer miteinander verbunden sind.

Bei der EP 544 203 A1 besteht der Balg bzw. die einzelnen Übergangsbögen aus einzelnen Materialstreifen, die in Umfangsrichtung des Balges aufeinander folgend entlang ihren Längskanten miteinander verbunden sind. Hierbei sind Bereiche vorgesehen, in denen der Balg steifer bzw. nachgiebiger ist. Dies wird nach der Lehre der EP 544 203 im Wesentlichen dadurch erreicht, dass der Kunststoff des Balges strahlvernetzt wird.

Aus der DE-OS 33 20 035 ist bereits ein kunststoffgespritzter Balg bekannt, wobei jedoch der Balg über seine Fläche eine unterschiedliche Materialstärke aufweist. Die unterschiedliche Materialstärke dient dazu, den Balg an verschiedenen Stellen steifer bzw. weicher zu gestalten. Es hat sich allerdings gezeigt, dass die Herstellung eines Balges mit einer unterschiedlichen Materialstärke über seine gesamte Oberfläche nur mit erhöhtem technischen Aufwand machbar ist.

Der Erfindung liegt daher die Aufgabe zugrunde, einen Balg oder ein Element eines Balges der eingangs genannten Art bereitzustellen, das einfach und preiswert in der Herstellung ist, das aber dennoch in den einschlägigen Bereichen derart steif ist, dass ein Durchhängen des Balges vermieden wird.

Die Aufgabe wird erfindungsgemäß dadurch gelöst, dass der Balg oder das Element eines Balges eine über seine Oberfläche im Wesentlichen gleiche Materialstärke aber unterschiedliche Steifigkeit aufweist, wobei der Balg im Faltengrund bzw. im Übergangsbereich zweier Weilen eines Falten- oder Wellenbalges jeweils eine im Querschnitt U-profilförmige Rahmenschiene aufweist, wobei der Kunststoff von dem durch die U-profilförmige Rahmenschiene gebildeten Hohlraum aufgenommen wird, und wobei im Bereich der Balgecken ein Kunststoff mit niedrigerem E-Modul als im Seitenwandbereich eingesetzt wird. Das heißt, dass an den Stellen, an denen der Balg, um eben ein Durchhängen des Balges zu verhindern, steifer ausgebildet werden muss, z. B. im Seitenwandbereich ein entsprechend steiferer Kunststoff Verwendung findet, also im Eckbereich, dass hingegen an den Stellen, an denen der Balg elastisch sein muss, ein im Wesentlichen weicherer Kunststoff, d. h. ein Kunststoff mit niedrigem E-Modul zur Anwendung kommt. Hierbei kann im Einzelnen vorgesehen sein, dass im Faltengrund eines Balges ein Kunststoff mit höherem E-Modul verwendet wird, als im Bereich der Schenkel einer Falte; gleiches gilt im Wesentlichen für Wellenbälge, wobei im Übergangsbereich zwischen zwei Wellen eines Wellenbälges das Material dort ebenfalls steifer ausgebildet ist, als im übrigen Bereich einer Welle.

Weitere vorteilhafte Merkmale sind den Unteransprüchen zu entnehmen.

So ist nach einem besonderen Merkmal vorgesehen, dass die Rahmenschiene, die der Balg im Faltengrund, bzw. im Übergangsbereich zweier Wellen als Balgversteifung aufweist, und die insbesondere in Form einer umlaufenden Rahmenschiene ausgebildet ist, an die Falte oder Welle angespritzt ist. Hierbei ist vorgesehen, dass die Rahmenschiene, die aus Kunststoff oder Metall besteht und die zur Bildung eines Hohlraumes im Querschnitt U-profilförmig ausgebildet ist, so in der Spritzgussform einliegt, dass der Kunststoff durch den Hohlraum aufgenommen wird. Hieraus wird deutlich, dass eine solche Schiene quasi das Gerippe bildet, das dafür sorgt, dass der Balg eine gewisse Eigenstabilität aufweist, die verhindert, dass der Balg durchhängt, die aber dennoch eine hohe Auszugsweite des Balges erlaubt.

Anhand der Zeichnungen wird die Erfindung nachstehend beispielhaft näher erläutert.
- Figur 1: zeigt schematisch einen Wellenbalg;
- Figur 2: zeigt schematisch einen Faltenbalg;
- Figur 3: zeigt schematisch einen Balg in räumlicher Darstellung.

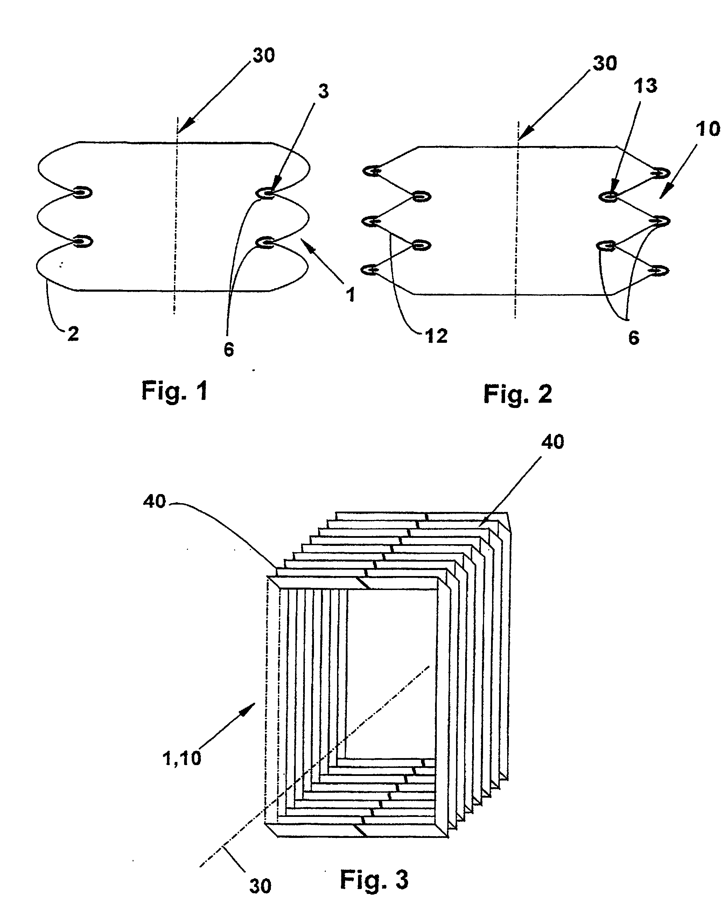

Bei den Darstellungen gemäß den Figuren 1 und 2 ist aus Vereinfachungsgründen das jeweilige Fahrzeug weggelassen. Die Darstellung ist - wie bereits ausgeführt - in den Figuren 1 und 2 lediglich schematisch. Der in Figur 1 mit 1 bezeichnete Wellenbalg zeigt die Wellenflanken 2 und den Übergangsbereich 3 zwischen zwei Wellen eines Wellenbalges. Der in Figur 2 dargestellte Faltenbalg 10 besitzt Faltenflanken 12, wobei der Grund einer jeden Falte des Faltenbalges mit 13 bezeichnet ist. Die Fahrzeuglängsachse hat das Bezugszeichen 30. Im Bereich des Faltengrundes bzw. des Überganges zwischen zwei Wellen befindet sich eine Balgversteifung in Form einer im Querschnitt U-profilförmigen Rahmenschiene 6 aus Kunststoff oder Metall, die an das übrige Balgmaterial derart angespritzt ist, dass sich eine stoffschlüssige Verbindung zwischen der Schiene und dem Balgmaterial ergibt. Hierbei ist vorgesehen, dass das Material des Balges, also beispielsweise der PU-Schaum, durch den Hohlraum in der U-profilförmigen Schiene aufgenommen wird. Zur Versteifung ist ebenfalls vorgesehen, dass In bestimmten Bereichen des Balges der Kunststoff unterschiedlich gewählt werden kann. So kann vorgesehen sein, dass im Bereich der vier Ecken 40 eines Balges der Kunststoff wesentlich elastischer, d. h. einen niedrigeren E-Modul aufweist, als im Seitenwand-, Decken oder Bodenbereich, da gerade im Eckbereich eine erhöhte Dehnfähigkeit des Balges verlangt wird.

## Patentansprüche

1. Balg oder Element eines Balges eines Überganges zwischen zwei gelenkig miteinander verbundenen Fahrzeugen, wobei der Balg aus gespritztem Kunststoff hergestellt ist, wobei der Balg oder das Element eines Balges eine über seine Oberfläche im Wesentlichen gleiche Materialstärke aber unterschiedliche Steifigkeit aufweist, wobei der Balg im Faltengrund (13) bzw. im Übergangsbereich zweier Wellen (3) eines Falten- oder Wellenbalges jeweils eine im Querschnitt U-profilförmige Rahmenschiene (6) aufweist, wobei der Kunststoff von dem durch die U-profilförmige Rahmenschiene (6) gebildeten Hohlraum aufgenommen wird, und wobei im Bereich der Balgecken ein Kunststoff mit niedrigerem E-Modul als im Seitenwandbereich eingesetzt wird.

2. Balg oder Element eines Balges nach Anspruch 1,
**dadurch gekennzeichnet,**
**dass** die Rahmenschiene (6) umlaufend ausgebildet ist und an die Falte oder Welle angespritzt ist.

3. Balg oder Element eines Balges nach Anspruch 1,
**dadurch gekennzeichnet,**
**dass** die Rahmenschiene (6) aus Kunststoff oder Metall besteht.

4. Balg oder Element eines Balges nach Anspruch 1,
**dadurch gekennzeichnet,**
**dass** im Faltengrund eines Faltenbalges ein Kunststoff mit einem höheren E-Modul verwendet wird als im Bereich der Schenkel einer Falte.

5. Balg oder Element eines Balges nach Anspruch 1,
**dadurch gekennzeichnet,**
**dass** im Übergangsbereich zweier Wellen eines Wellenbalges ein Kunststoff mit höherem E-Modul verwendet wird als im übrigen Bereich der Welle eines Wellenbalges.

6. Balg oder Element eines Balges nach einem der voranstehenden Ansprüche,
**dadurch gekennzeichnet,**
**dass** zur Herstellung des Balges (1, 10) Polyurethan verwendet wird.

## Claims

1. A bellows or a bellows element of a connection between two hinge-linked vehicles, the bellows being made of extruded plastic, the bellows or the bellows element being provided, across the surface thereof, with substantially the same material thickness but with varying rigidity, the bellows being provided, in the bottom portion (13) of the pleat or in the transition area between two corrugations (3) of a concertina or expansion bellows, with a frame rail (6) with a U-shaped profile in cross-section, the plastic being received by the hollow space formed by the frame rail (6) with a U-shaped profile in cross-section, the plastic used in the region of the bellows' corners having a lower E-module than that utilized in the side wall region.

2. The bellows or bellows element according to claim 1,
**characterized in that**
the frame rail (6) is configured to contour and is injection moulded to the pleat or the corrugation.

3. The bellows or bellows element according to claim 1,
**characterized in that**
the frame rail (6) is made of plastic or metal.

4. The bellows or bellows element according to claim 1,
**characterized in that**
in the bottom portion of the pleat of a concertina bellows, the plastic used has a higher E-module than in the region of the leg of a pleat.

5. The bellows or bellows element according to claim 1,
**characterized in that,**
in the transition region between two corrugations of an expansion bellows the plastic used has a higher E-module than the remaining area of the corrugation of an expansion bellows.

6. The bellows or bellows element according to one of the afore mentioned claims,
**characterized in that**
polyurethane is used to manufacture the bellows (1, 10).

## Revendications

1. Soufflet ou élément de soufflet d'une intercirculation entre deux véhicules articulés fabriqué en matière plastique extrudée, le soufflet ou l'élément de soufflet étant pourvu, sur toute sa surface, d'une épaisseur de matériau sensiblement uniforme mais d'une rigidité variable, le soufflet étant pourvu, au fond de chaque pli (13) ou dans chaque zone de transition entre deux ondulations (3) d'un soufflet ondulé ou à plis, d'un rail d'encadrement (6) présentant une section en forme de U dans un plan transversal, la matière plastique étant reçue dans une cavité formée par le rail d'encadrement (6) de section en forme de U dans un plan transversal, la matière plastique utilisée dans la région des coins du soufflet étant de module E moins élevé que celle utilisée dans la région des parois latérales.

2. Soufflet ou élément de soufflet selon la revendication 1,
**caractérisé en ce que**
le rail d'encadrement (6) est périphérique et est venu de moulage par injection d'une seule pièce avec le pli ou l'ondulation.

3. Soufflet ou élément de soufflet selon la revendication 1,
**caractérisé en ce que**
le rail d'encadrement (6) est en matière plastique ou en métal.

4. Soufflet ou élément de soufflet selon la revendication 1,
**caractérisé en ce que**
la matière plastique utilisée dans le fond d'un pli d'un soufflet à plis est d'un module E plus élevé que celle utilisée dans la région des branches d'un pli.

5. Soufflet ou élément de soufflet selon la revendication 1,
**caractérisé en ce que**
la matière plastique utilisée dans la zone de transition entre deux ondulations d'un soufflet ondulé est d'un module E plus élevé que celle utilisée dans la zone restante de l'ondulation d'un soufflet ondulé.

6. Soufflet ou élément de soufflet selon l'une des revendications précédentes,
**caractérisé en ce que**
du polyuréthane est utilisé pour fabriquer le soufflet (1,10).
